# EUROPEAN PATENT APPLICATION

(11) **EP 4 760 061 A1**
(43) Date of publication of application: **17.06.2026**
(21) Application number: 25222648.5
(22) Date of filing: 11.12.2025
(51) Int. Cl.: F01D 21/00, F01D 25/00

(54) **SYSTEM AND METHOD FOR WASH TIME ESTIMATION FOR AN AIRCRAFT ENGINE**

(30) Priority: 13.12.2024 IN 202411098635
(71) Applicant: General Electric Company, Cincinnati, Ohio 45215 (US)
(72) Inventor: PETKAR, Kirti Arvind, 560066 Bengaluru (IN); GANIGER, Ravindra Shankar, 560066 Bengaluru (IN); YAMARTHI, David Raju, 560066 Bengaluru (IN); RAMADURAI, Krishna, 560066 Bengaluru (IN); GRAHAM, Andrew Crispin, Altrincham, WA14 2DT (GB)
(74) Representative: Openshaw & Co.

(57) **Abstract**

A system 100 for wash time estimation for aircraft components 300, 310 includes a processor 220 and a memory 230. The memory 230 includes instructions which, when executed by the processor 220, cause the system 100 at least to perform capturing an image of a surface of a stud 308 disposed in a portion of an aircraft component 300, 310; determining a volume of particulate matter 314 on a surface of the stud 308 based on the captured image; providing, by an analytic model, a wash parameter based on the volume of particulate matter 314; and recommending a wash based on the determined wash parameter.

## Description

### CROSS-REFERENCE TO RELATED APPLIATION(S)

This application claims priority to Indian Provisional Application No. 202411098635 filed December 13, 2024, which is incorporated herein by reference in their entirety.

### TECHNICAL FIELD

The present disclosure relates to performance recovery prediction for aircraft components of, for example, aircraft engines. Particularly, the present disclosure relates to a system and a method for engine wash time estimation for aircraft engines.

### BACKGROUND

Washing an aircraft engine is essential for maintaining performance and efficiency of such aircraft engine. Over time, dirt, dust, salt, and other contaminants can build up on engine components of the aircraft engine, which can lead to reduced airflow, increased drag, and higher fuel consumption. Regular washing helps remove these deposits, restoring the engine's optimal operating conditions and extending its lifespan. Additionally, a clean engine runs cooler and experiences less wear, which reduces maintenance costs and the likelihood of in-flight issues. Overall, engine washing is a preventive measure that supports performance and cost-effectiveness.

### BRIEF DESCRIPTION OF THE DRAWINGS

A better understanding of the features and advantages of the disclosed technology will be obtained by reference to the following detailed description that sets forth illustrative aspects, in which the principles of the technology are utilized, and the accompanying drawings of which:
FIG. 1 illustrates a system for engine wash time estimation for an aircraft engine, according to an exemplary aspect;
FIG. 2 is a block diagram of a controller of the system of FIG. 1, in accordance with one aspect;
FIG. 3 is an image of a stud of the system of FIG. 1 disposed in a component of an aircraft in accordance with one aspect;
FIG. 4 is an enlarged side cutaway view of an example plug with a stud of the system of FIG. 1 in accordance with one aspect;
FIG. 5 is another example side view of the stud of the system of FIG. 1 in accordance with one aspect;
FIG. 6 is another example side view of the stud of the system of FIG. 1 in accordance with one aspect; and
FIG. 7 is a flow diagram illustrating a method for engine wash time estimation for an aircraft engine in accordance with one aspect.

### DETAILED DESCRIPTION

Although this disclosure will be described in terms of specific aspects, it will be readily apparent to those skilled in this art that various modifications, rearrangements, and substitutions may be made without departing from the spirit of this disclosure.

With increased fleet and utilization, the need to estimate whether an aircraft engine requires a wash (e.g., or time between washes) and the wash time (e.g., duration of the wash) is useful for better fleet planning. The system collects information reflecting particulate accumulation and determines the wash time needed to remove the particulate accumulation from an aircraft component, such as an aircraft engine or portions thereof.

For the purpose of promoting an understanding of the principles of this disclosure, reference will now be made to exemplary aspects illustrated in the drawings, and specific language will be used to describe the same. It will nevertheless be understood that no limitation of the scope of this disclosure is thereby intended. Any alterations and further modifications of the features illustrated herein, and any additional applications of the principles of this disclosure, as illustrated herein, which would occur to one skilled in the relevant art and having possession of this disclosure, are to be considered within the scope of this disclosure.

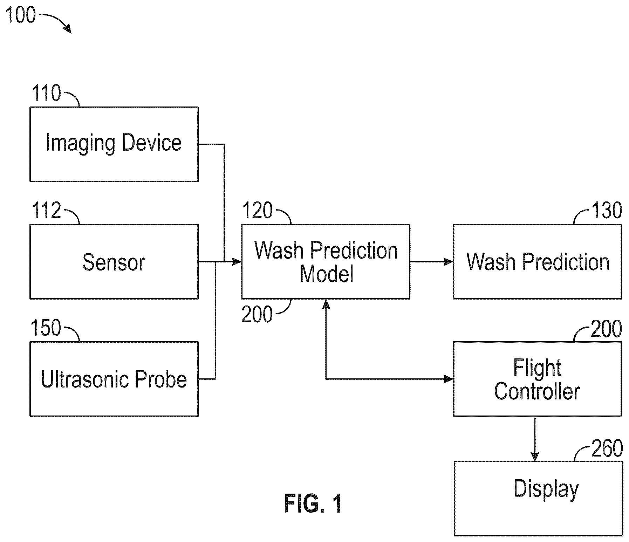

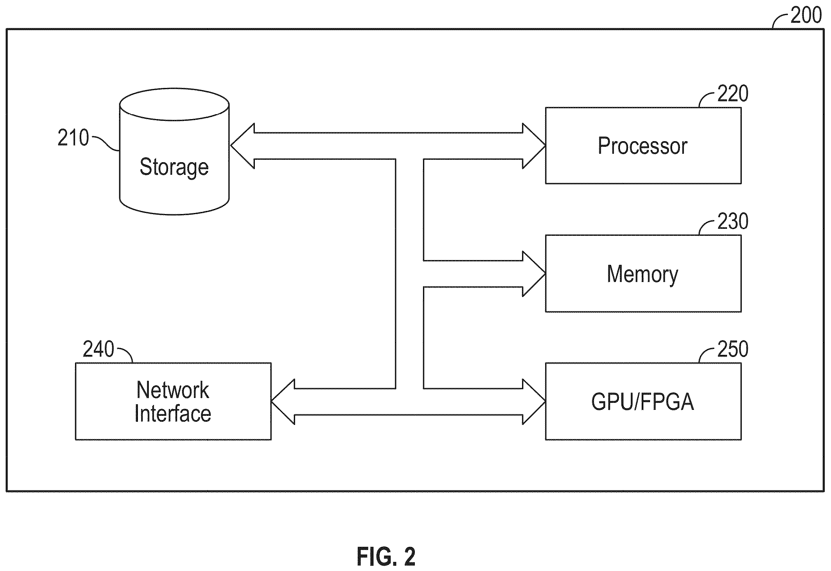

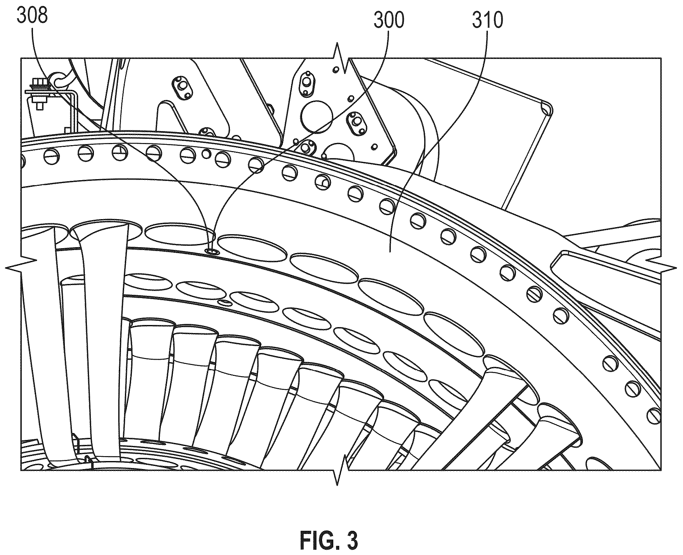

FIG. 1 illustrates an exemplary system 100 for engine wash time estimation for an aircraft engine, according to an aspect. With increased fleet and utilization, the need to estimate whether an aircraft engine requires a wash (e.g., or time between washes) and the wash time (e.g., duration of the wash) is useful for better fleet planning. The system 100 generally includes an imaging device 110, a sensor 112 and/or a probe to collect information reflecting particulate accumulation, and a controller 200 (see FIG. 2) configured to execute a wash prediction model 120 (e.g., an analytics model). That information is sent to and processed by a wash prediction model 120 that determines a prediction 130 of the wash time needed to remove the particulate accumulation from an aircraft component such as an aircraft engine or portions thereof. The particulate matter may be on a stud 308 (for example, disposed on a plug 300 of the engine of FIG. 3 such as a borescope plug) which is configured to collect particulate matter during operation of the component. The imaging device 110 (e.g., a camera) is configured to capture images of the surface of the stud 308. The wash prediction model 120 is configured to provide information predictive of a wash time for a component 310 (FIG. 3). For example, the imaging device 110 may be permanently located in the engine and facing the stud, or may be disposed on a tool that is inserted into the engine (component 310) to check the stud after each flight or after a predefined number of flights.

In aspects, the stud (e.g., approximately 3 mm to approximately 4 mm long) may be incorporated on a plug 300 (e.g., a borescope plug) of an aircraft engine. For example, during the operation, particulate matter, such as dust, will stick to the stud 308 prior to the wash procedure or after the wash has progressed through at least one cycle, the wash is paused and the stud 308 is inspected. In aspects, system 100 may utilize optical imaging comparing post flight images of the stud 308 with prior images of the stud 308 to provide an estimate of the dust accumulation and planning the wash process. This estimate can help in deciding the wash time required through the use of the wash prediction model 120.

In embodiments, the stud 308 may be a calibrated stud placed at suitable locations in the engine, which may be viewed through a borescope. Images recorded may then be used for dust approximation and/or wash time estimation. In aspects, the calibrated stud may be weighed before at least one flight (e.g., after a wash) and then compared to a post-flight stud 308 mass. The difference may be used in deciding the wash time through the use of the wash prediction model 120.

In embodiments, the calibrated plug 300 may be removed and washed to determine if it accumulated particulate matter. Then, based on the length of time it took to wash the stud portion of the plug 300, this information may be used in deciding the wash time required through the use of the wash prediction model 120. In embodiments, the system 100 may monitor the property of the effluent, collection of the wash, and/or amount of dust dissolved in wash liquid as a function of the wash time and proportionately scale the property to determine the total wash time required for the engine.

In aspects, the system may include a sensor 112 disposed on the plug 300. The sensor 112 is configured to determine an accumulation of particulate matter on the stud 308. In aspects, sensor 112 may be wireless and/or self-powered. For example, the sensor may be configured to generate its own power based on motion. For example, the sensor may include piezoelectric materials, which produce electrical energy when subjected to mechanical stress or vibrations. By embedding such materials in parts of the object experiencing repeated motion, such as vibrations from movement or oscillatory movement, the sensor may be powered without external batteries. In another example, electromagnetic induction may be used by the sensor to supply power. For example, the sensor may include a magnet that moves relative to a coil as the sensor moves, generating electricity.

In embodiments, a chip resistor may be disposed on the tip of the plug 300 and/or the tip of the stud 308 mounted on the borescope plug, which can be used to quantify the dust accumulation without opening the plug 300. Based on the resistivity change because of dust, the controller 200 can quantify the volume and/or sense a type of particulate matter accumulation.

In aspects, the system 100 may include a wireless ultrasonic probe 150 configured to inspect the thickness of dust on the stud 308. The dust accumulated can then be used as a measure to determine the wash parameters, such as wash duration and/or wash concentration.

In aspects, a capacitive sensor may be attached to the stud 308. The change in permittivity (based on pre and post flight measurements or otherwise pre-determined) based on dust accumulation would be measured by controller 200 and used to determine particulate matter accumulation.

The system 100 may compare a current image with previously set images to give an estimation of dust in the engine. An average estimate of the dust accumulation from studs 308 mounted at different engine locations can be determined. This estimate can help in deciding the wash time required through a software algorithm. Alternatively, calibrated studs located at suitable locations in the engine can be viewed through a borescope. The recorded images may be used for dust approximation and/or wash time estimation.

In an aspect, a piezo transducer may be disposed on a surface of the plug 300. The stud 308 may be mechanically actuated preflight to generate a profile (e.g., a resonant frequency) as measured by the piezo transducer, which would communicate this signal to the controller 200. Post-flight, the same stud 308 may be mechanically actuated and the measured profile would be compared. The difference in the profile would then be used to determine the particulate matter accumulation. For example, if the resonant frequency decreased, then that may be an indication of an accumulation of dust. This may be performed in-flight, if the sensor system is connected to the flight controller and data transmitted via the Aircraft Communications Addressing and Reporting System (ACARS).

The aircraft component, e.g., the engine, may need cleaning of material deposited on a high-pressure compressor (HPC) flow path hardware. Deposited material may include, for example, dust, sand, hydrocarbon pollutants, salt-laden air (e.g., from coastal airports), de-icing fluid (e.g., from runways and/or taxiways) among several others. There are at least two types of wash cleaning: water wash and foam wash. The wash provides the benefit of using chemistry to remove sand and dust contamination from the flow path hardware that is, for example, common to the regions where the engine is exposed to high dust regions such as middle east countries in Asia.

Engine wash provides benefits of HPC efficiency improvement, EGT (exhaust gas temperature) margin recovery, deterioration trending parameter estimating engine health relative to a pre-certified maximum temperature level using EGT measured at takeoff, improved fuel flow recovery, reduced carbon emissions, improved performance retention (cycles), mitigation of mid-life hot section distress, and improved time on-wing for the engine.

Atmospheric particle deposits may form, for example, a loose dust layer (forward stage of the engine inlet), an intermediate dust layer (mid-stage), and/or a hardened layer (aft stage). During operation, a substantial amount of air is ingested by such gas turbine engines. However, air may contain foreign particles. A majority of the foreign particles will follow a gas path through the engine and exit with the exhaust gases. However, at least certain amount of these particles may stick to and form hardened deposits on certain components within the gas turbine engine's gas core flow path, potentially changing aerodynamic and/or thermal properties of the engine and reducing engine performance. Traditionally, in order to remove such foreign particles from within the gas path of the gas turbine engine, a cleaning fluid may be directed into the gas path of the gas turbine engine to remove the contaminants. For example, foam can be introduced into the gas turbine engine and passes through the gas turbine engine to remove contaminants from inside. The foam carries or transports the contaminants out of the gas turbine engine. However, a typical wash cycle for foam cleaning systems may last for several hours and typically involves cycle times of up to or greater than four hours to properly clean the turbine engine.

The system 100 provides the benefits of providing a more accurate and precise forecast of the engine wash time which will benefit the process by providing higher accuracy in the engine wash scheduling forecasts. The prediction can also be leveraged in evaluating the impact of various parameters in the overall engine component design.

The wash prediction model 120 may receive as input data, including, for example, raw time series flight-by-flight data, remote diagnostics data from individual flights, and/or data models. The system 100 can use model data incorporating nonlinear effects of various factors on the engine wash requirements and can also enable modeling the interaction between various factors (e.g., exhaust gas temperature (EGT), wash events, and/or hours of operation). The model can also have the ability to define new factors from historic data. The system 100 is configured to directly or indirectly register the input data, which, for example, may include engine performance/configuration data from a single engine or a fleet of engines. The input data may be analyzed utilizing application-specific instructions located in controller 200 and may be output by the system 100.

Performance data herein, for the single-engine or for the fleet of engines, may include, for example, cycle data, hours of operation, and operating temperature. Furthermore, configuration data may include any other configuration parameters associated with an engine. The time series flight-by-flight data may further include engine-specific data from the fleet, on-wing and shop inspection data, engine time on wing data, component scrap rate data, engine deterioration data, engine build configuration, utilization history, and/or an allowable fallout risk.

In aspects, an analytical method for selecting engines that require washing is provided. Engine washing boosts engine efficiency by improving the exhaust gas temperature (EGT) margin, which ultimately extends the interval between shop visits.

The system 100 provides the benefit of leveraging historical and current engine wash data. These factors serve as inputs to an analytic model that estimates improvements in EGT margin, fuel flow, and compressor efficiency if a wash is performed on the engine. These estimates may be combined with predefined criteria, such as current EGT margin, engine cycles since the last shop visit, and engine cycles since the last wash, to make informed decisions.

The system 100 generally includes a wash prediction model 120 (e.g., an analytics model). The output of the analytics model may be used for maintenance decisions, including foam wash or water wash planning and sequence. In aspects, the system 100 may also be used to make the most advantageous wash interval recommendations (e.g., wash is the maintenance decision enabled) or wash duration using the wash prediction model. In aspects, the system 100 may provide a web-based application that can be used to develop custom wash schedules for various engine lines and components.

Referring now to FIG. 2, exemplary components in the controller 200 in accordance with aspects of the present disclosure include, for example, at least one storage 210, at least one processor 220 (which could include processing machine learning models), at least one memory 230, and a network interface 240. The network interface 240 may be wired or wireless. In aspects, the controller 200 may include a graphical processing unit (GPU)/field programmable gate array (FPGA) 250.

The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc^{™}, or the like.

In various aspects, data may be stored on controller 200, including, for example, user preferences, historical data, and/or other data. The data can be stored in storage 210 and transmitted via the system bus to processor 220.

As will be described in more detail later herein, processor(s) 220 execute(s) various processes based on instructions that can be stored in the memory 230 and utilizing data from storage 210. With reference also to FIG. 1, a request from a user device, such as a mobile device or a client computer, can be communicated to a server through the controller's network interface 240. The illustration of FIG. 2 is exemplary, and those skilled in the art will understand the other components may exist in controller 200. Such other components are not illustrated in FIG. 2 for clarity of illustration.

FIG. 3 is a view of the stud 308 of system 100 disposed within the borescope plug 300 of component 310. Stud(s) 308 may be located, for example, in proximity to a leading edge of a stator/rotor vane, an inner span of a low pressure (LP)/high pressure (HP) compressor/turbine blade, or other suitable location where dust or other particulate matter may accumulate.

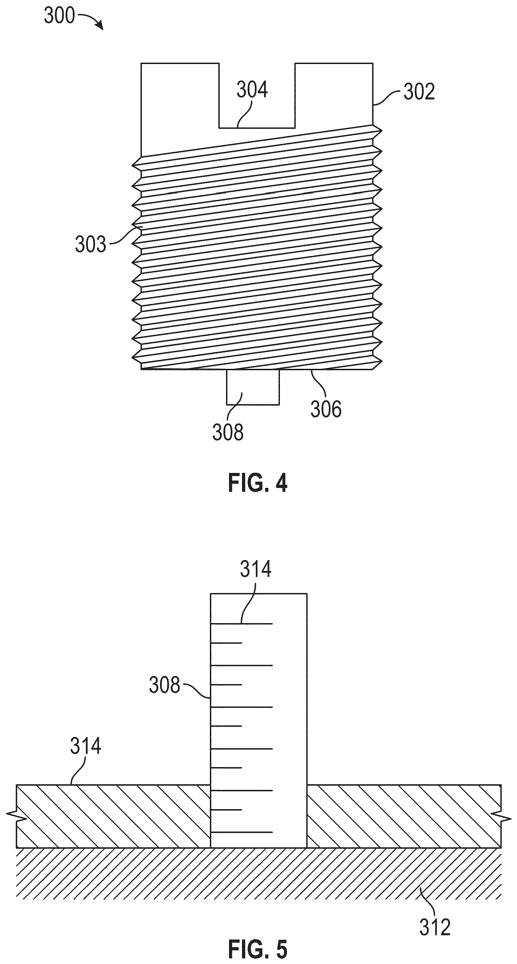

FIG. 4 is an enlarged side view of an example plug 300 and stud 308 of the system 100 of FIG. 1. The plug 300 includes a body 302 with threads 303. The threads 303 are configured for mating with threads of the borescope plug hole of component 310 (e.g., engine). The body 302 includes a bottom surface 306 from which the stud 308 extends. The stud 308 may have a circular or square cross-section. However, other suitable shapes are contemplated. For example, the stud 308 may have a flat surface for particulate deposit (e.g., dust and/or sand). In another example, the flat surface may have serrations or ridges. In yet another example, the stud 308 may be shaped to match the profile of the leading edge of an airfoil. In aspects, studs of different sizes may be used in the systems at one or more locations in the engine. For example, one size may be better suited to capturing dust, whereas a larger size may be better at capturing sand accumulation.

The body 302 may also have a recess 304 configured for receipt of a tool for adjusting the depth of the stud 308 in the borescope port hole of the component 310 (e.g., engine).

FIG. 5 is an enlarged side cutaway view of a stud 308 of the system 100 of FIG. 1 disposed in a component 310 of an aircraft. The particulate matter 314 collects on a surface (e.g., a leading edge) of the stud 308 as well as on a surface 312 of the aircraft component 310.

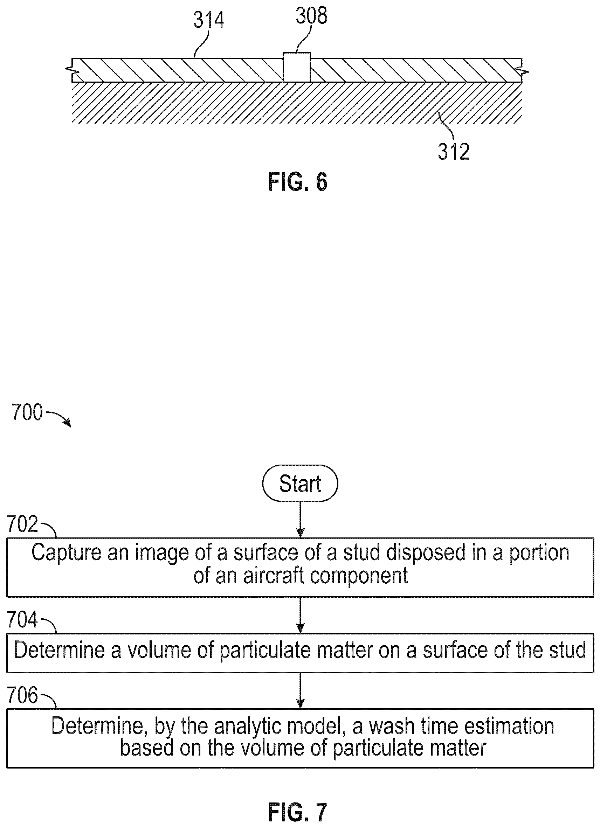

Referring to FIG. 6, another enlarged side view of an example stud 308 of the system 100 of FIG. 1 is shown. The stud 308 is almost completely obscured by the particulate matter 314 that has collected on surface 312 of component 310.

Referring to FIG. 7, a method 700 for estimation of time between engine wash for aircraft components is shown. The operations of FIG. 7 may be implemented by instructions stored in the memory and executed by the processor of the controller 200 (FIG. 2). The controller 200 causes the system 100 to access time series flight-by-data relating to a component 310 of an aircraft. The data may include performance data. For example, data may include engine-specific data from the fleet, wash event related data (e.g., frequency of wash, last wash, type of wash), EGT, engine time on wing data, component scrap rate data, and/or engine deterioration data. The EGT is generally measured by one or more thermocouples mounted in the exhaust stream.

At operation 702, controller 200 causes the imaging device 110 to capture an image of a surface of a stud 308 of a plug 300 disposed in a component 310 (e.g., an engine).

In aspects, controller 200 accesses a measurement of a sensor located on a borescope plug disposed in a portion of an aircraft component.

At operation 704, controller 200 determines a volume of particulate matter (e.g., atmospheric particle deposits) on a surface of the stud based on the captured image. For example, system 100 may compare a preflight image of the stud 308 with a post-flight image of the stud 308 to provide an estimate of the dust accumulation and plan the wash process. In another example, the controller 200 may determine the volume based on data from the sensor.

At operation 706, controller 200 determines, by the analytic model, a wash parameter based on the determined volume of particulate matter. The analytic model may include image recognition using a machine learning model. In aspects, the analytic model may be trained on images of studs covered in various amounts of particulate matter (e.g., dust and/or sand). For example, wash parameters may include wash duration and/or wash fluid pH and/or total dissolved solids content.

In one aspect, controller 200 may recommend a wash based on the input wash parameters. In another aspect, the dust volume determined by the analytic model may be adjusted based on performance data or data relating to a wash event. For example, if the EGT margin has decreased, but the post-flight image would not on its own cause the system 100 to recommend a wash, the system may recommend a wash based on the combination of the reduced EGT margin and the post-flight image particulate matter assessment.

In aspects, the recommendation may be displayed, for example, on a display screen 260 (FIG. 1), (e.g., in the cockpit or at a remote terminal). In another example, the recommendation may be communicated, e.g., as a digital file or communication, to a computing device (e.g., a server or a mobile device) of a remote servicer for providing the wash. In aspects, the recommendation may automatically trigger a wash, e.g., based on the input wash parameters, by actuating a valve on a wash system configured to wash the engine to initiate washing. One of skill in the art would be familiar with systems for washing engines of aerospace vehicles.

For example, a stud 308 located on a plug 300 of an aircraft engine may initially start off free of particulate matter. The "clean" stud 308 may be imaged prior to the operation of this engine. After the operation of the engine, for example, after a few flights, controller 200 may determine the volume of particulate matter (e.g., atmospheric particle deposits) on the surface of the stud 308 based on a captured image post-operation of the engine. The analytic model may determine a wash duration (e.g., length of time of wash) and a wash fluid pH based on the determined volume of particulate matter. The controller 200 would then determine a wash recommendation based on the determined wash duration and wash fluid pH and display that recommendation on a display (for example, visible to a maintenance crew) to cause the engine to be washed according to the determined wash duration and wash fluid pH.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Further aspects of the present disclosure are provided by the subject matter of the following clauses.

A system for wash time estimation for aircraft components, the system comprising: a processor; and a memory including instructions which, when executed by the processor, cause the system at least to: capture an image of a surface of a stud disposed in a portion of an aircraft component; determine a volume of particulate matter on a surface of the stud based on the captured image; determine, by an analytic model, a wash parameter based on the volume of particulate matter; and recommend a wash based on the determined wash parameter.

The system according to the preceding clause, wherein the stud is disposed on a portion of a borescope plug disposed in a portion of the aircraft component.

The system according to any preceding clause, wherein the instructions which, when executed by the processor, further cause the system to at least to: access data around a wash event, by the analytic model; and adjust the determined wash parameter, wherein the accessed data around a wash event includes at least one of engine exhaust gas temperature, compressor efficiency, fuel flow, rate of deterioration of the aircraft component after a wash, shop visit time, or engine wash frequency.

The system according to any preceding clause, wherein the accessed data around a wash event includes at least one of engine gas temperature, compressor efficiency, fuel flow, rate of deterioration of the aircraft component after a wash, shop visit time, or engine wash frequency.

The system according to any preceding clause, wherein the instructions, when executed by the processor, further cause the system at least to: determine a wash frequency and duration based on the determined wash parameter.

The system according to any preceding clause, wherein the stud is disposed on an end portion of a borescope plug.

The system according to any preceding clause, wherein the wash parameter includes wash duration and/or wash fluid pH or total dissolved solids content.

The system according to any preceding clause, wherein the instructions, when executed by the processor, further cause the system at least to: determine whether to perform at least one of a water wash or a foam wash based on the determined wash parameter.

The system according to any preceding clause, wherein the aircraft component is an engine.

A system for wash time estimation for aircraft components, the system comprising: a processor; and a memory including instructions which, when executed by the processor, cause the system at least to: access a measurement of a sensor located on a borescope plug disposed in a portion of an aircraft component; determine a volume of particulate matter on a surface of a stud based on the measurement; determine, by an analytic model, a wash parameter based on the volume of particulate matter; and recommend a wash based on the determined wash parameter.

The system according to the preceding clause, wherein the sensor includes at least one of a chip resistor, a piezo sensor, a wireless ultrasonic probe, or a capacitive sensor.

The system according to any preceding clause, wherein the sensor is wireless and self-powered.

The system according to any preceding clause, wherein the chip resistor is configured to change resistance based on the accumulation of particulate matter.

A processor-implemented method for wash time estimation for aircraft components, the method comprising: capturing an image of a surface of a stud disposed in the aircraft component; determining a parameter indicating a particulate matter accumulation parameter on a surface of the stud based on the captured image; and using the particulate matter accumulation parameter as input to a machine learning and/or analytical model to determine a wash parameter.

The processor-implemented method according to the preceding clause, further comprising accessing data around a wash event, by the analytic model; and adjusting the determined wash parameter.

The processor-implemented method according to any preceding clause, wherein the accessed data around a wash event includes at least one of engine gas temperature, compressor efficiency, fuel flow, rate of deterioration of the component after a wash, shop visit time, or engine wash frequency.

The processor-implemented method according to any preceding clause, further comprising determining a wash frequency and duration based on the determined wash parameter.

The processor-implemented method according to any preceding clause, wherein the stud is disposed on an end portion of a borescope plug.

The processor-implemented method according to any preceding clause, wherein the wash parameter includes wash duration and/or wash concentration and/or wash fluid pH or total dissolved solids content.

The processor-implemented method according to any preceding clause, further comprising determining whether to perform at least one of a water wash or a foam wash based on the determined wash parameter.

The processor-implemented method according to any preceding clause, wherein the component is an engine.

It should be understood that the description herein is only illustrative of this disclosure. Various alternatives and modifications can be devised by those skilled in the art without departing from the disclosure. Accordingly, this disclosure is intended to embrace all such alternatives, modifications, and variances. The aspects described are presented only to demonstrate certain examples of the disclosure. Other elements, steps, methods, and techniques that are insubstantially different from those described above and/or in the appended claims are also intended to be within the scope of the disclosure.

## Claims

1. A system (100) for wash time estimation for aircraft component (300, 310) (310)s, the system (100) comprising:
a processor (220); and
a memory (230) including instructions which, when executed by the processor (220), cause the system (100) at least to perform:
capturing an image of a surface of a stud (308) disposed in a portion of an aircraft component (300, 310) (310);
determining a volume of particulate matter (314) on a surface of the stud (308) based on the captured image;
determining, by an analytic model, a wash parameter based on the volume of particulate matter (314); and
recommending a wash based on the determined wash parameter.

2. The system (100) of claim 1, wherein the stud (308) is disposed on a portion of a borescope plug (300, 308) (300, 311) disposed in a portion of the aircraft component (300, 310) (310).

3. The system (100) of claim 2, wherein the instructions, when executed by the processor (220), further cause the system (100) at least to perform:
accessing data around a wash event, by the analytic model; and
adjusting the provided wash parameter,
wherein the accessed data around a wash event includes at least one of engine (300, 310) exhaust gas temperature, compressor efficiency, fuel flow, rate of deterioration of the aircraft component (300, 310) (310) after a wash, shop visit time, or engine (300, 310) wash frequency.

4. The system (100) of any of claims 1 to 3, wherein the instructions, when executed by the processor (220), further cause the system (100) at least to perform:
determining a wash frequency and duration based on the determined wash parameter.

5. The system (100) of any of claims 1 to 4, wherein the stud (308) is disposed on an end portion of a borescope plug (300, 308) (300, 311).

6. The system (100) of any of claims 1 to 5, wherein the wash parameter includes wash duration and/or wash fluid pH or total dissolved solids content.

7. The system (100) of any of claims 1 to 6, wherein the instructions, when executed by the processor (220), further cause the system (100) at least to perform:
determining whether to perform at least one of a water wash or a foam wash based on the determined wash parameter.

8. The system (100) of any of claims 1 to 7, wherein the aircraft component (300, 310) (310) is an engine (300, 310).

9. A system (100) for wash time estimation for aircraft component (300, 310) (310)s, the system (100) comprising:
a processor (220); and
a memory (230) including instructions which, when executed by the processor (220), cause the system (100) at least to perform:
accessing a measurement of a sensor (112) located on a borescope plug (300, 308) (300, 311) disposed in a portion of an aircraft component (300, 310) (310);
determining a volume of particulate matter (314) on a surface of a stud (308) based on the measurement;
providing, by an analytic model, a wash parameter based on the volume of particulate matter (314); and
recommending a wash based on the determined wash parameter.

10. The system (100) of claim 9, wherein the sensor (112) includes at least one of a chip resistor, a piezo sensor (112), a wireless ultrasonic probe (150), or a capacitive sensor (112).

11. The system (100) of claim 9 or 10, wherein the sensor (112) is wireless and self-powered.

12. The system (100) of claim 10 or 11, wherein the chip resistor is configured to change resistance based on accumulation of particulate matter (314).

13. A processor (220)-implemented method (700) for wash time estimation for an aircraft engine (300, 310), the method (700) comprising:
capturing an image of a surface of a stud (308) disposed in the aircraft component (300, 310) (310);
determining a parameter indicating a volume of particulate matter (314) on a surface of the stud (308) based on the captured image; and
using the particulate matter (314) accumulation parameter as input to a machine learning and/or analytical model to determine a wash parameter.

14. The processor (220)-implemented method (700) of claim 13, further comprising:
accessing data around a wash event, by the analytic model; and
adjusting the determined wash parameter.

15. The processor (220)-implemented method (700) of claim 14, wherein the accessed data around a wash event includes at least one of engine (300, 310) exhaust gas temperature, compressor efficiency, fuel flow, rate of deterioration of the aircraft component (300, 310) (310) after a wash, shop visit time, or engine (300, 310) wash frequency.
